(19) Europäisches Patentamt
European Patent Office
Office européen des brevets

(11) EP 2 562 699 A1

(12) **EUROPEAN PATENT APPLICATION**

(43) Date of publication:
**27.02.2013 Bulletin 2013/09**

(51) Int Cl.:
***G06Q 10/04*** (2012.01)

(21) Application number: **11185541.7**

(22) Date of filing: **18.10.2011**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **23.08.2011 US 215500**

(71) Applicant: **King Abdulaziz City for
Science & Technology (KACST)
11442 Riyadh (SA)**

(72) Inventor: **Al-Fawzan, Mohammad A.
11442 Riyadh (SA)**

(74) Representative: **Winkler, Andreas Fritz Ernst
Boehmert & Boehmert
Pettenkoferstrasse 20-22
80336 München (DE)**

(54) **Methods and systems for solving uncapacitated facility location problem**

(57)    Methods and systems for solving uncapacitated facility location problem are provided. A method includes establishing a maximum net benefit (MNB) of cost for closing one of one or more established facilities at one or more sites, and closing an established facility of the one or more established facilities that results in the MNB of cost for closing. The method further includes establishing a MNB of cost for opening one of one or more unestablished facilities at the one or more sites, and opening an unestablished facility of the one or more unestablished facilities that results in the MNB of cost for opening.

FIG. 1

EP 2 562 699 A1

**Description**

FIELD OF THE INVENTION

The invention relates to uncapacitated facility location problem (UFLP) and, more particularly, to methods and systems for solving the UFLP.

BACKGROUND OF THE INVENTION

The uncapacitated facility location problem (UFLP) includes how to place or locate one or more facilities among n possible sites with the objective of minimizing a total cost for satisfying all demands at m given locations. The total cost includes fixed charges for establishing the facilities and distribution costs for fulfilling the demands. More specifically, the UFLP can be mathematically stated as follows:

$$\min \sum_{i=1}^{n} \sum_{j=1}^{m} c_{ij} x_{ij} + \sum_{i=1}^{n} f_i y_i \quad (1),$$

subject to

$$\sum_{i=1}^{n} x_{ij} = 1 \qquad \forall j \in J \qquad (2);$$

$$x_{ij} \leq y_i \qquad \forall i \in I, j \in J \quad (3);$$

and

$$x_{ij}, y_i \in \{0,1\} \qquad \forall i \in I, j \in J \quad (4),$$

where:

$c_{ij}$ is a cost of serving a customer $j$ from a site $i$;
$f_i$ is a cost of establishing a facility at the site $i$;

$$x_{ij} = \begin{cases} 1 & \text{if the customer } j \text{ is served from the site } i \\ 0 & \text{otherwise} \end{cases};$$

$$y_i = \begin{cases} 1 & \text{if the facility is established at the site } i \\ 0 & \text{otherwise} \end{cases};$$

$$I = \{1,2,...,n\};$$

and

$$J = \{1,2,...,m\}.$$

The variable $x_{ij}$ is a binary variable because it is assumed that a demand of customer j, j = 1,2,..., $m$ is fulfilled by one and only one facility, say $k$ (i.e., no partial fulfillment of demand is allowed), in which case, $x_{kj} = 1$, $x_{ij} = 0$, for all $i = 1,2,..., n$, $i \neq k$. If this binary constraint is relaxed ($x_{ij} \geq 0$) then at least one solution set will contain strictly integer $x_{ij}$'s. The variable $y_i$ is also a binary variable since a facility i is either established ($y_i = 1$), in which case the fixed charge $f_i$ is incurred, or it is not established ($y_i = 0$), in which case no fixed charge is incurred.
The UFLP can mathematically be decomposed into two interdependent subproblems: location and allocation. More specifically, facilities to be established (i.e., $y_i$'s) are determined in the location subproblem. For these established facilities, a distribution pattern (i.e., $x_{ij}$'s) is determined in the allocation subproblem. In other words, for any solution of the location subproblem, a solution of the allocation subproblem may be obtained.
However, current processes for solving the UFLP may not be optimal in that they may not locate and establish facilities on sites the cheapest way possible. For example, these current processes may result in the establishment of more facilities than necessary. In addition, the current processes for refining or optimizing the establishment of facilities on sites may depend on a scanning order of the facilities, and different orders may lead to different results.
Accordingly, there exists a need in the art to overcome the deficiencies and limitations described hereinabove.

SUMMARY OF THE INVENTION

In a first aspect of the invention, a method includes establishing a maximum net benefit (MNB) of cost for closing one of one or more established facilities at one or more sites, and closing an established facility of the one or more established facilities that results in the MNB of cost for closing. The method further includes establishing a MNB of cost for opening one of one or more unestablished facilities at the one or more sites, and opening an unestablished facility of the one or more unestablished facilities that results in the MNB of cost for opening.
In another aspect of the invention, a computer program product includes a computer usable storage medium having readable program code embodied in the storage medium. The computer program product includes at least one component operable to randomly select at least one established facility of one or more established facilities at one or more sites and at least one unestablished facility of one or more unestablished facilities at the one or more sites. The at least one component is further operable to switch the at least one established facility with the at least one unestablished facility that results in a net benefit of cost.

In yet another aspect of the invention, a computer system for solving an uncapacitated facility location problem, includes a CPU, a computer readable memory and a computer readable storage media. The computer system further includes first program instructions to first program instructions to establish a maximum net benefit (MNB) of cost for closing one of one or more established facilities at one or more sites. Second program instructions close an established facility of the one or more established facilities that results in the MNB of cost for closing. Third program instructions establish a MNB of cost for opening one of one or more unestablished facilities at the one or more sites. Fourth program instructions open an unestablished facility of the one or more unestablished facilities that results in the MNB of cost for opening. Fifth program instructions randomly select at least one established facility of the one or more established facilities and at least one unestablished facility of the one or more unestablished facilities. Sixth program instructions switch the at least one established facility with the at least one unestablished facility that results in a net benefit of cost. The first, second, third, fourth, fifth, and sixth program instructions are stored on the computer readable storage media for execution by the CPU via the computer readable memory.

BRIEF DESCRIPTION OF THE DRAWINGS

The present invention is described in the detailed description which follows, in reference to the noted plurality of drawings by way of non-limiting examples of exemplary embodiments of the present invention.
FIG. 1 shows an illustrative environment for implementing the steps in accordance with aspects of the invention; and
FIGS. 2-6 show exemplary flow diagrams implementing processes in accordance with aspects of the invention.

DETAILED DESCRIPTION OF THE INVENTION

The invention relates to uncapacitated facility location problem (UFLP) and, more particularly, to methods and systems for solving the UFLP. More specifically, the present invention is directed to a facility manager, which manages locations and allocations of one or more facilities operable to fulfill one or more demands of one or more customers, e.g., solve the UFLP. For example, in the steel industry, the facilities can include steel plants operable to produce, e.g., master steel coils or rolls and steel slabs for the customers. In embodiments, the facility manager may locate or establish the facilities in one or more sites or locations. To establish the facilities in the sites, the facility manager may receive from the sites information associated with the sites, e.g., an indication whether a facility is established at a site, an indication whether a customer is served from the site, etc.
Once the information associated with the sites is received, the facility manager can perform a Net Benefit Heuristic (NBH) closing process based on such information. The NBH closing process includes determining a net benefit of cost of closing each established facility at the sites, and based on resulting values, closing an established facility with a maximum net benefit (MNB) of cost. A net benefit of cost from closing an established facility occurs when a savings due to a closure of the established facility (e.g., a fixed charge) is higher than an extra cost incurred by reallocating a demand originally allocated to the established facility to a next cheapest established facility. Advantageously, the NBH closing process efficiently refines or optimizes the locating or establishing of the facilities at the sites by closing the established facility resulting in the MNB. Further, the NBH closing process does not depend on a scanning order of the facilities since the net benefit of closing each established facility is determined before closing the established facility with the MNB.
Once the NBH closing process is complete, the facility manager can perform a NBH opening process, which includes determining a net benefit of cost of opening each unestablished facility at the sites. Based on resulting values, an unestablished facility with a MNB of cost, may be opened. A net benefit of cost from opening an unestablished facility occurs when a savings due to reallocating a demand originally allocated to an established facility to the unestablished facility is higher than an extra cost incurred by an opening of the unestablished facility, e.g., a fixed charge. By implementing the present invention, the NBH opening process efficiently refines the locating of the facilities at the sites by opening the unestablished facility resulting in the MNB.
Once the NBH opening process is complete, the facility manager can perform a NBH switching process. The NBH switching process includes switching an established facility with an unestablished facility, at the sites (e.g., setting the established facility to be unestablished and the unestablished facility to be established), if the switching results in a lower total cost. Advantageously, the NBH switching process efficiently refines the locating of the facilities at the sites by combining and reaping cost benefits of closing the established facility and opening the unestablished facility.

SYSTEM ENVIRONMENT

The present invention may be embodied as a system, method or computer program product. The present invention may take the form of a hardware embodiment, a software embodiment or a combination of software and hardware. Furthermore, the present invention may take the form of a computer program product embodied in any tangible storage of expression having computer-usable program code embodied in the medium. The computer-usable or computer-readable medium may be any medium that can contain, store, or communicate, for use by or in connection with the instruction execution system, apparatus, or device. The computer-usable or computer-readable medium may be, for example, an electronic, magnetic, optical, electromagnetic, infrared, or semiconductor system, apparatus, or device.

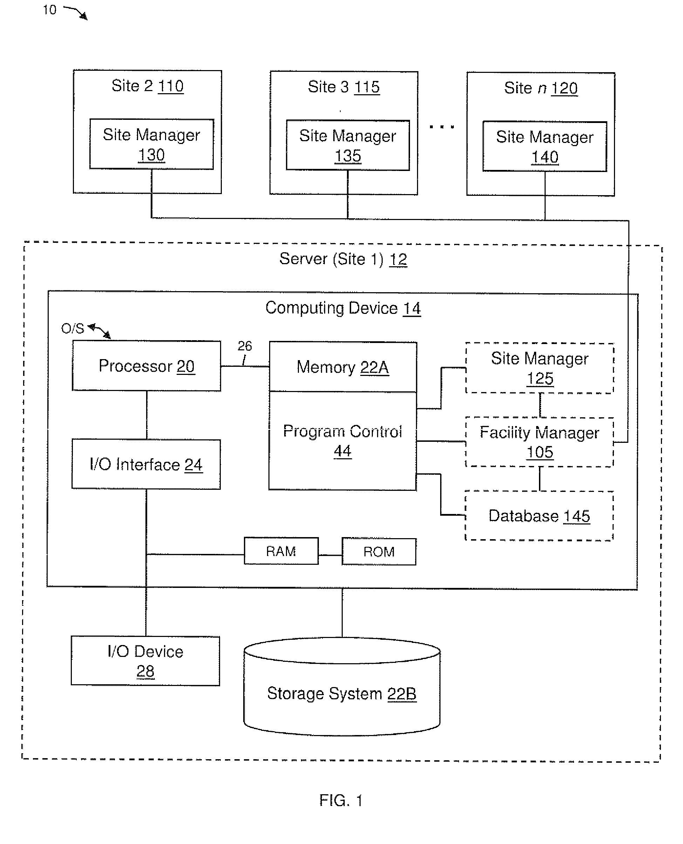

FIG. 1 shows an illustrative environment 10 for managing the processes in accordance with aspects of the invention. The environment 10 includes a server or other computing system 12 that can perform the processes described herein. The server 12 includes a computing device 14 which can be resident on a network infrastructure or computing device. The computing device 14 includes a processor 20, memory 22A, an I/O interface 24, and a bus 26. In addition, the computing device includes random access memory (RAM), a read-only memory (ROM), and an operating system (O/S).

The computing device 14 is in communication with the external I/O device/resource 28 and the storage system 22B. The I/O device 28 can comprise any device that enables an individual to interact with the computing device 14 (e.g., user interface) or any device that enables the computing device 14 to communicate with one or more other computing devices using any type of communications link.

The processor 20 executes computer program code (e.g., program control 44), which can be stored in the memory 22A and/or storage system 22B. While executing the computer program code, the processor 20 can read and/or write data to/from memory 22A, storage system 22B, and/or I/O interface 24. The program code executes the processes of the invention such as, for example, solving the uncapacitated facility location problem (UFLP), as will be discussed below.

The computing device 14 includes a facility manager 105 controlled by the program control 44. The facility manager 105 manages locations and allocations of one or more facilities operable to fulfill one or more demands of one or more customers, e.g., solve the UFLP. For example, in the steel industry, the facilities can include steel plants operable to produce, e.g., master steel coils or rolls and steel slabs for the customers. In the transportation industry, the facilities may include bus or subway stations operable to provide transportation to the customers, e.g., passengers. In a computer network, the facilities may include hubs connecting one or more computers or terminals and providing, e.g., network access for the customers.

In embodiments, the facility manager 105 in the server 12 at "Site 1" can locate or establish the facilities in one or more sites or locations, e.g., the Site 1 (12), a Site 2 (110), a Site 3 (115), and a Site n (120). $n$ may be a total number of the sites in the environment 10. To establish the facilities in the sites, the facility manager 105 may be in communication with one or more site managers, e.g., site managers 125, 130, 135, and 140 in the sites 12, 110, 115, and 120, respectively. More specifically, the facility manager 105 may receive from the site managers 125, 130, 135, and 140 information associated with the sites 12, 110, 115, and 120, respectively, e.g., an indication whether a facility is established at a site, an indication whether a customer is served from the site, etc. The received information may be stored in a database 145 of the server 12 that may be implemented in, e.g., the storage system 22B and/or a separate memory of the server 12. Alternatively or additionally, the facility manager 105 may estimate the information associated with the sites 12, 110, 115, and 120.

In accordance with further aspects of the invention, the information associated with the sites 12, 110, 115, and 120 can further include a total number m of the demands of the customers, the total number $n$ of the sites, one or more costs $f_i$ of establishing a facility at a site $i$, and one or more costs $C_{ij}$ of serving a customer $j$ from the site $i$. For example, the information associated with the sites 12, 110, 115, and 120 may be set as follows:

$$m = 3;$$

$$n = 3;$$

$$f_i = 1;$$

and

$$c_{ij} = \begin{vmatrix} 0 & 1 & 1 \\ 1 & 0 & 1 \\ 1 & 1 & 0 \end{vmatrix}.$$

Once the information associated with the sites 12, 110, 115, and 120 is received and/or estimated, the facility manager 105 performs a Net Benefit Heuristic (NBH) closing process. The NBH closing process includes determining a net benefit of cost of closing each established facility at the sites 12, 110, 115, and 120, and based on resulting values, closing an established facility with a maximum net benefit *(MNB)* of cost. A net benefit of cost from closing an established facility occurs when a savings due to a closure of the established facility (e.g., a fixed charge) is higher than an extra cost incurred by reallocating a demand originally allocated to the established facility to a next cheapest established facility.

Advantageously, the NBH closing process refines or optimizes the locating or establishing of the facilities at the sites 12, 110, 115, and 120, by closing the established facility resulting in the *MNB.* The NBH closing process is also time efficient in refining the locating of the facilities. Additionally, the NBH closing process does not depend on a scanning order of the facilities since the net benefit of closing each established facility is determined before closing the established facility with the *MNB.*

More specifically, in embodiments, the NBH closing process can include an initial phase, which includes determining an initial list or solution S of established facilities at the sites 12, 110, 115, and 120 and initial values associated with the initial list. In other words, the NBH closing process may assume that an initial list of the established facilities is not empty. The determining of the initial list or solution S of the established facilities may include receiving or estimating the information associated with the sites 12, 110, 115, and 120, namely, one or more indications $y_i$'s whether a facility is established at each site $i$. The determining of the initial values associated with the initial list may include determining one or more indications $x_{ij}$'s whether a customer or demand $j$ is served from each site i, based on the received information associated with the sites 12, 110, 115, and 120. More particularly, for any given $y_i$ vector, an optimal assignment of the $x_{ij}$'s may be obtained by using the following equation:

$$k : \min_k c_{kj}, k = 1, ..., n \qquad (5);$$

and

$$x_{ij} = \begin{cases} 1 & \text{if } i = k \\ 0 & \text{otherwise} \end{cases} \qquad (6).$$

Therefore, if $y_i$'s are known, the $x_{ij}$'s can be determined using the above equation. The determining of the initial values associated with the initial list may further include determining an objective function $F$ of the initial list or solution S that constitutes as an upper bound of an optimal solution for the UFLP, e.g., locating the facilities at the sites 12, 110, 115, and 120. The objective function F may be determined based on the received information associated with the sites 12, 110, 115, and 120 and the determined indications $x_{ij}$'s, using the following equation:

$$F = \sum_{i=1}^{n} \sum_{j=1}^{m} c_{ij} x_{ij} + \sum_{i=1}^{n} f_i y_i \qquad (7).$$

For example, using the information associated with the sites 12, 110, 115, and 120 discussed above, an optimal solution or initial list S could be to open facilities at the Sites 1 and 2 (e.g., the sites 12 and 110), and assign customer or demand 1 to Site 2 and demands 2 and 3 to Site 1. Based on the equation (7) described above, a value of the objective function $F$ of the optimal solution S would be 1.

In accordance with further aspects of the invention, the NBH closing process can include a second or refinement phase, which includes setting a current objective function $F1$ to the determined objective function $F$. An iteration marker $k$ may be set to 1, and a number $m^*$ of the established facilities in the initial list S may be determined or set to $|S|$. The NBH closing process may further include setting a *MNB* of cost of closing one of the established facilities to zero.

In embodiments, the NBH closing process can consider the $k^{th}$ established facility in the initial list S, and determine that a site s includes the $k^{th}$ established facility. A variable set $T$ may be set to include indices of all demands currently satisfied by the facility at the site s. For each demand $t$ currently satisfied by the facility at the site s, the NBH closing process may include determining an established facility at a site r other than the facility at the site that could satisfy this demand $t$ at a minimum cost, and determining a cost $d_t$ of reallocation of this demand to the established facility at the site r. For example, for each demand $t$ in the set $T$, the cost $d_t$ of reallocation of the demand $t$ to the established facility at the site r may be determined as follows:

$$d_t = c_{lt} - c_{st} \qquad (8),$$

where $c_{lt} = \min c_{rt}$, $c_{rt}$ is a cost of serving demand $t$ from the site $r$, $r \in S$, $r \neq s$, and $c_{st}$ is a cost of serving demand $t$ from the site s.

In accordance with further aspects of the invention, the NBH closing process can determine an extra cost $\delta$ of reallocation of demands currently satisfied by the facility at the site $s$ to the established facility at the site $r$, that is equal to the cost $d_t$ of reallocation of the demands, less a savings $f_s$ due to a closure of the facility at the site $s$. More specifically, the extra cost $\delta$ of reallocation may be determined by the following equation:

$$\delta = \sum_{t \in T} d_t - f_s \qquad (9).$$

If the extra cost $\delta$ of reallocation is less than 0, and is less than *MNB,* then the *MNB* may be set to the extra cost $\delta$ of reallocation, and a variable $s^*$ may be set to the facility at the site $s$.

In embodiments, the NBH closing process can determine if the iteration marker $k$ is equal to the number m * of the established facilities in the initial list *S*. If the iteration marker *k* is not equal to the number *m\**, then the iteration marker *k* may be set to *k* + 1, and the NBH closing process may return to prior steps of the process and consider the *(k* + 1.)th established facility. In other words, in this case, the NBH closing process has not completed a pass through all of the established facilities in the initial list S, to determine net benefits of closing the established facilities, and determines such values for the remaining established facilities.

In accordance with further aspects of the invention, if the iteration marker is equal to the number *m\**, then the NBH closing process can close the facility at the site *s,* or set the initial list *S* to S - s\*. The objective function *F* may be updated to account for the MNB of closing the facility at the site s, or be set to *F + MNB.* The NBH closing process may include determining whether the updated objective function *F* is less than the current objective function *F1*. If the objective function F is less than the current objective function *F1*, then the refinement phase of the NBH closing process may be performed again to close another established facility in the initial list or solution *S.* Otherwise, the NBH closing process ends.

Once the NBH closing process is complete, the facility manager 105 performs a NBH opening process. The NBH opening process includes determining a net benefit of cost of opening each unestablished facility at the sites 12, 110, 115, and 120, and based on resulting values, opening an unestablished facility with a *MNB* of cost. A net benefit of cost from opening an unestablished facility occurs when a savings due to reallocating a demand originally allocated to an established facility to the unestablished facility is higher than an extra cost incurred by an opening of the unestablished facility, e.g., a fixed charge. Advantageously, the NBH opening process efficiently refines the locating of the facilities at the sites 12, 110, 115, and 120, by opening the unestablished facility resulting in the *MNB.*

More specifically, in embodiments, the NBH opening process can include the same initial phase performed in the NBH closing process, that includes determining the initial list or solution S of the established facilities at the sites 12, 110, 115, and 120 and the initial values associated with the initial list. The NBH opening process may include a second or refinement phase, which includes setting the current objective function *F1* to the objective function *F* determined during the initial phase. The iteration marker *k* may be set to 1, and a number *q\** of unestablished facilities in a complement set $\overline{S}$ of the initial list *S* (e.g., a set of unestablished facilities) may be determined, or set to $|\overline{S}|$ or n - $|S|$ . The NBH opening process may further include setting a *MNB* of cost of opening one of the unestablished facilities to zero.

In embodiments, the NBH opening process can consider the *k*th unestablished facility in the set $\overline{S}$, and determine that the site s includes the *k*th unestablished facility. The variable set *T* may be set to include indices of all demands that can be satisfied by the facility at the site s. For each demand *t* that can be satisfied by the facility at the site *s,* the NBH opening process may include determining an established facility at a site *r* other than the facility at the site *s* that has satisfied this demand *t* at a minimum cost, and determining a cost $d_t$ of reallocation of this demand to the unestablished facility at the site *s*. For example, for each demand *t* in the set *T,* the cost $d_t$ of reallocation of the demand *t* to the unestablished facility at the site *s* may be determined as follows:

$$d_t = c_{lt} - c_{st} \quad (10),$$

where $c_{lt}$ = min $c_{rt}$, $c_{rt}$ is a cost of serving demand *t* from the site *r*, $r \in S$, and $c_{st}$ is a cost of serving demand *t* from the site *s*.

In accordance with further aspects of the invention, the NBH opening process can determine an extra cost $\delta$ of opening the unestablished facility at the site s, that is equal to a cost $f_s$ due to an opening of the facility at the site *s*, less than the *cost $d_t$* of reallocation of the demands. More specifically, the extra cost $\delta$ of opening may be determined by the following equation:

$$\delta = f_s - \sum_{t \in T} d_t \quad (11).$$

If the extra cost $\delta$ of opening is less than 0, and is less than *MNB,* then the *MNB* may be set to the extra cost $\delta$ of opening, and a variable *s\** may be set to the facility at the site *s.*

In embodiments, the NBH opening process can determine if the iteration marker *k* is equal to the number *q\** of the unestablished facilities in the set *S*. If the iteration marker *k* is not equal to the number *q\**, then the iteration marker *k* may be set to *k* + *1,* and the NBH opening process may return to prior steps of the process and consider the (k + 1)th established facility. In other words, in this case, the NBH opening process has not completed a pass through all of the unestablished facilities in the set $\overline{S}$, to determine net benefits of opening the unestablished facilities, and determines such values for the remaining unestablished facilities.

In accordance with further aspects of the invention, if the iteration marker is equal to the number *q\**, then the NBH opening process can opening the facility at the site *s*, or set the initial list *S* to S + s\*. The objective function *F* may be updated to account for the *MNB* of opening the facility at the site *s*, or be set to *F + MNB*. The NBH opening process may include determining whether the updated objective function *F* is less than the current objective function *Fl*. If the objective function *F* is less than the current objective function *F1*, then the refinement phase of the NBH opening process may be performed again to open another unestablished facility in

the set $\overline{S}$. Otherwise, the NBH opening process ends.

Once the NBH opening process is complete, the facility manager 105 performs a NBH switching process. The NBH switching process includes switching an established facility with an unestablished facility, at the sites 12, 110, 115, and 120, e.g., setting the established facility to be unestabli shed and the unestablished facility to be established. More specifically, the NBH switching process includes randomly selecting an established facility and an unestablished facility, at the sites 12, 110, 115, and 120, determining whether switching the established and the unestablished facilities results in a lower total cost, and if so, switching the established and the unestablished facilities. In embodiments, the NBH switching process may be performed for predetermined number *ITERSWTCH* of iterations. Advantageously, the NBH switching process efficiently refines the locating of the facilities at the sites 12, 110, 115, and 120, by combining and reaping cost benefits of closing the established facility and opening the unestablished facility until termination of the processes of the present invention.

For example, in an environment including 20 possible sites, a list of facilities established or to be established can include those at sites 1, 3, and 8 with a total cost of $1000. The NBH switching process may determining that switching the facility at site 3 with an unestablished facility at site 5 will reduce the total cost by an amount of $200. Hence, the NBH switching process may switch the facility at site 3 with the unestablished facility at site 5, and a new list of facilities established or to be established may include those at sites 1, 5, and 8 with a total cost of $800.

More specifically, in embodiments, the NBH switching process can include the same initial phase performed in the NBH closing and opening processes, that include determining the initial list or solution $S$ of the established facilities at the sites 12, 110, 115, and 120 and the initial values associated with the initial list. The NBH switching process may include a second or refinement phase, which includes setting the current objective function *FI* to the objective function F determined during the initial phase. A number *ITERSWCH* of iterations performed by the NBH switching process may be determined, or set to a predetermined number. The NBH switching process may include determining a complement set $\overline{S}$ of the initial list S (e.g., a set of unestablished facilities).

In accordance with further aspects of the invention, the NBH switching process can include setting the iteration marker $k$ to 1. An established facility at a site r may be randomly selected from the set $S$, and an unestablished facility at a site $t$ may be randomly selected from the set S . The NBH switching process may include setting an indication $y_r$ to zero, to indicate that the facility at the previously-established site r is unestablished, and setting an indication $y_t$ to one, to indicate that the previously-unestablished facility at the site $t$ is established. In other words, the facilities at the sites r and $t$ are switched, at least temporarily in the records of the facility manager 105.

In embodiments, the NBH switching process can include the determining of the initial values associated with the initial list $S$, namely, the determining of the indications $x_{ij}$'s whether the customer or demand j is served from each site i, based on the received information associated with the sites 12, 110, 115, and 120, the updated indications $y_r$ and $y_i$ and the equations (5) and (6) described above. The objective function $F$ of the initial list S is also determined based on the received information associated with the sites 12, 110, 115, and 120, the updated indications $y_r$ and $y_t$, and the determined indications $x_{ij}$'s, using the equation (7) described above. That is, the NBH switching process recalculates the initial values associated with the initial list $S$ based on the possible switching of the facilities at the sites r and $t$.

In accordance with further aspects of the invention, the NBH switching process can include determining whether the recalculated objective function F is less than the current objective function *F1*. If the objective function F is not less than the current objective function FI, then the indications $y_r$ and $y_t$ are reset, e.g., the indication $y_r$ is set to one to indicate the facility at the site r is established, and the indication $y_t$ is set to zero, to indicate that the facility at the site $t$ is unestablished. If the objective function F is less than the current objective function *F1*, then the NBH switching process may close the established facility at the site r (e.g., set the initial list S to S - r and/or set the set $\overline{S}$ to $\overline{S}$ + r) and open the unestablished facility at the site $t$ (e.g., set the initial list S to $S$ + t and/or set the set $\overline{S}$ to $\overline{S}$ - t). In addition, the current objective function *F1* is set to the recalculated objective function F to account for the switching of the facilities at the sites r and $t$.

In embodiments, the NBH switching process can determine if the iteration marker $k$ is equal to the number *ITERSWCH* of iterations performed by the NBH switching process. If the iteration marker $k$ is not equal to the number *ITERSWCH,* then the iteration marker $k$ may be set to $k + 1$, and the NBH switching process may return to prior steps of the process, e.g., the randomly selecting of established and unestablished facilities to potentially switch. In other words, in this case, the NBH switching process has not completed the determined or predetermined number *ITERSWCH* of iterations to optimize the solution of the UFLP, e.g., the locating of the facilities at the sites 12, 110, 115, and 120. If the iteration marker $k$ is equal to the number *ITERSWCH,* then the NBH switching process ends.

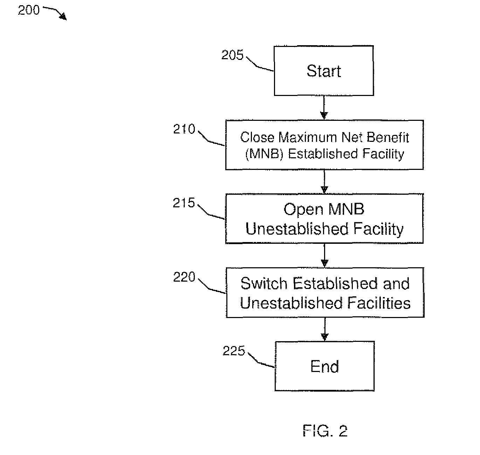

FIGS. 2-6 show exemplary flow diagrams implementing processes in accordance with aspects of the invention. Each of the flow diagrams may equally represent a high-level block diagram or a swim-lane diagram of the invention. The steps of the flow diagrams may be implemented and executed from either a server, in a client server relationship, or they may run on a user workstation with operative information conveyed to the user workstation. Furthermore, the invention can take the form of a computer program product accessible from a computer-usable or computer-readable medium providing program code for use by or in connection with a computer or any instruction execution system. The software and/or computer program product can be implemented in the environment of FIG. 1.

As shown in FIG. 2, at step 205, a process 200 of the invention begins. At step 210, an established facility at a site (e.g., one of the sites 12, 110, 115, and 120) with a maximum net benefit (MNB) of cost for closing the established facility, is closed. The closing process (e.g., the Net Benefit Heuristic (NBH) closing process described above with respect to FIG. 1) includes determining a net benefit of cost of closing each established facility at one or more sites, and based on resulting values, closing the established facility with the *MNB*.

At step 215, an unestablished facility at a site with a *MNB* of cost for opening the unestablished facility, is opened. The opening process (e.g., the NBH opening process described above with respect to FIG. 1) includes determining a net benefit of cost of opening each unestablished facility at the sites, and based on resulting values, opening the unestablished facility with the *MNB*. At step 220, one or more established facilities and one or more unestablished facilities, at the sites 12, 110, 115, and 120, are switched, e.g., the established facilities are set to be unestablished and the unestablished facilities are set to be established. More specifically, the switching process (e.g., the NBH switching process described above with respect to FIG. 1) includes randomly selecting the established and the unestablished facilities, determining whether switching the established and the unestablished facilities results in a lower total cost, and if so, switching the established and the unestablished facilities. At step 225, the process of the invention ends.

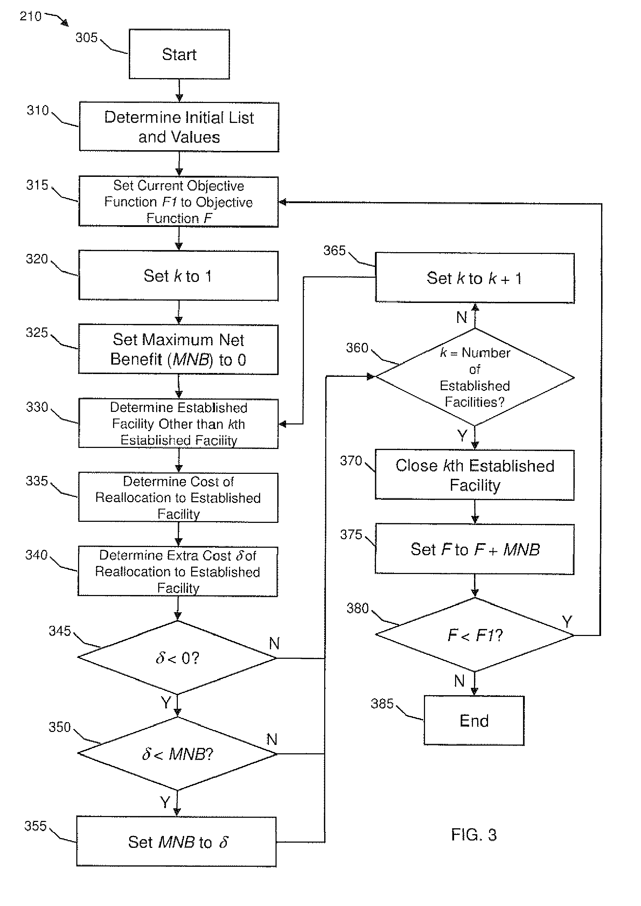

FIG. 3 shows an exemplary flow for the closing process of the step 210 in FIG. 2 in accordance with aspects of the present invention. At step 305, the process begins. At step 310, an initial list or solution of established facilities at sites and initial values associated with the initial list (e.g., one or more indications whether a facility is established at each site and an objective function *F*) are determined. At step 315, a current objective function *F1* is set to the determined objective function *F*.

At step 320, an iteration marker *k* is set to 1. At step 325, a maximum net benefit (*MNB*) of cost of closing one of the established facilities is set to zero. At step 330, for each demand currently satisfied by a *k*th established facility in the initial list, an established facility other than the *k*th established facility that could satisfy this demand at a minimum cost, is determined. At step 335, a cost of reallocation of this demand to the other established facility, is determined, e.g., based on the equation (8) described above.

At step 340, an extra cost $\delta$ of reallocation of demands currently satisfied by the *k*th established facility to the other established facility. In embodiments, the extra cost $\delta$ of reallocation is equal to the cost of reallocation of the demands, less a savings due to a closure of the *k*th established facility. At step 345, it is determined whether the extra cost $\delta$ of reallocation is less than 0. If so, the process continues at step 350; otherwise, the process continues at step 360.

At step 350, it is determined whether the extra cost $\delta$ of reallocation is less than *MNB*. If so, the process continues at step 355; otherwise, the process continues at step 360. At step 355, the *MNB* is set to the extra cost $\delta$ of reallocation. At step 360, it is determined whether the iteration marker *k* is equal to a number of the established facilities in the initial list. If so, the process continues at step 370; otherwise, the process continues at step 365.

At step 365, the iteration marker *k* is set to *k* + 1, and the process returns to step 330. In other words, in this case, the process has not completed a pass through all of the established facilities in the initial list, to determine net benefits of closing the established facilities, and determines such values for the remaining established facilities. At step 370, the *k*th established facility is closed. At step 375, the objective function F is updated to account for the *MNB* of closing the *k*th established facility, or is set to *F + MNB*.

At step 380, it is determined whether the updated objective function F is less than the current objective function *F1*. If so, the process returns to step 315, to perform the closing process again to close another established facility in the initial list or solution. Otherwise, the process continues to step 385. At step 385, the process ends.

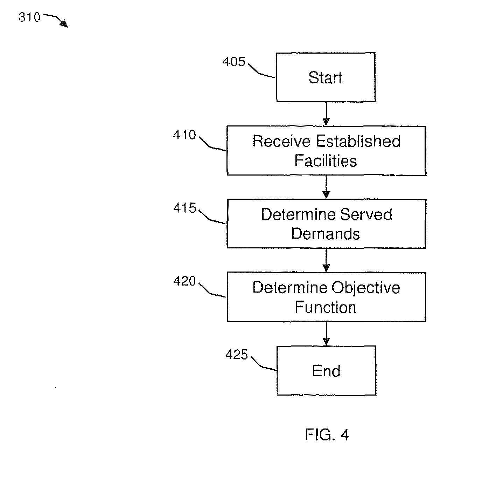

FIG. 4 shows an exemplary flow for the determining of the initial list and values of the step 310 in FIG. 3 in accordance with aspects of the present invention. At step 405, the process begins. At step 410, one or more indications whether a facility is established at each site (e.g., "established facilities"), along with other information associated with sites, is received or estimated. At step 415, one or more indications whether a customer or demand is served from each site (e.g., "served demands") is determined based on the received information associated with the sites (e.g., the established facilities). At step 420, an objective function of the initial list or solution is determined and constitutes as an upper bound of an optimal solution for the UFLP, e.g., locating the facilities at the sites. The objective function is determined based on the received information associated with the sites and the determined served demands. At step 425, the process ends.

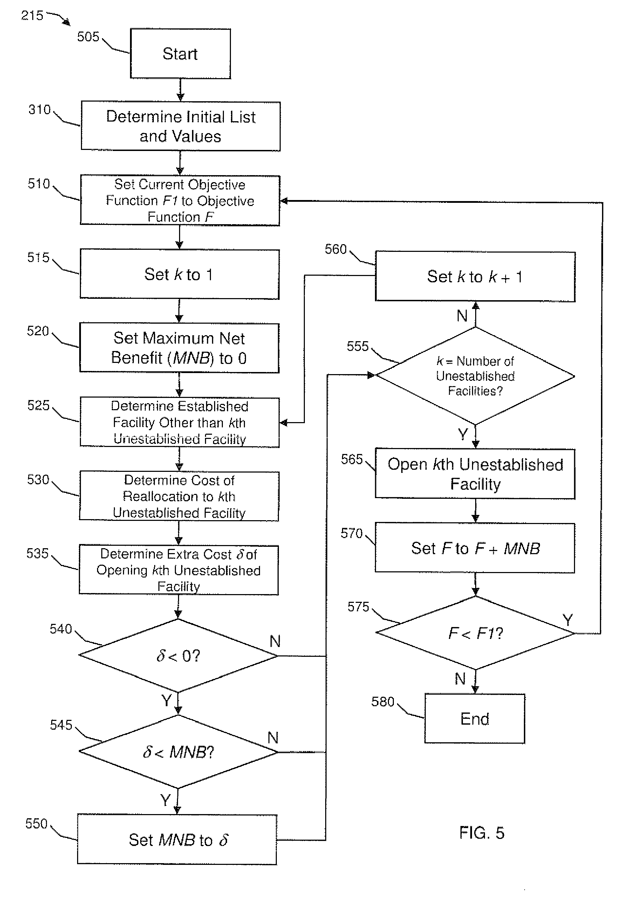

FIG. 5 shows an exemplary flow for the opening process of the step 215 in FIG. 2 in accordance with aspects of the present invention. At step 505, the process begins. At step 310, an initial list or solution of established facilities at sites and initial values associated with the initial list (e.g., an objective function F), are determined, as described above with respect to FIG. 4. At step 510, a current objective function *F1* is set to the determined objective function F.

At step 515, an iteration marker $k$ is set to 1. At step 520, a maximum net benefit *(MNB)* of cost of opening one of unestablished facilities in a complement set of the initial list is set to zero. At step 525, for each demand that can be satisfied by a $k$th unestablished facility, an established facility other than the $k$th unestablished facility that has satisfied this demand at a minimum cost, is determined. At step 530, a cost of reallocation of this demand to the $k$th unestablished facility is determined.

At step 535, an extra cost $\delta$ of opening the $k$th unestablished facility is determined. In embodiments, the extra cost $\delta$ of opening the $k$th unestablished facility is equal to a cost due to an opening of the $k$th unestablished facility, less than the cost of reallocation of this demand to the $k$th unestablished facility. At step 540, it is determined whether the extra cost $\delta$ of reallocation is less than 0. If so, the process continues at step 545; otherwise, the process continues at step 555.

At step 545, it is determined whether the extra cost $\delta$ of reallocation is less than *MNB*. If so, the process continues at step 550; otherwise, the process continues at step 555. At step 550, the *MNB* is set to the extra cost $\delta$ of reallocation. At step 555, it is determined whether the iteration marker $k$ is equal to a number of the unestablished facilities in the complement set of the initial list. If so, the process continues at step 565; otherwise, the process continues at step 560.

At step 560, the iteration marker $k$ is set to $k + 1$, and the process returns to step 525. In other words, in this case, the process has not completed a pass through all of the unestablished facilities in the complement set of the initial list, to determine net benefits of opening the unestablished facilities, and determines such values for the remaining unestablished facilities. At step 565, the $k$th unestablished facility is opened. At step 570, the objective function F is updated to account for the *MNB* of opening the $k$th unestablished facility, or is set to $F + MNB$,

At step 575, it is determined whether the updated objective function F is less than the current objective function *F1*. If so, the process returns to step 510, to perform the opening process again to open another unestablished facility in the initial list or solution. Otherwise, the process continues to step 580. At step 580, the process ends.

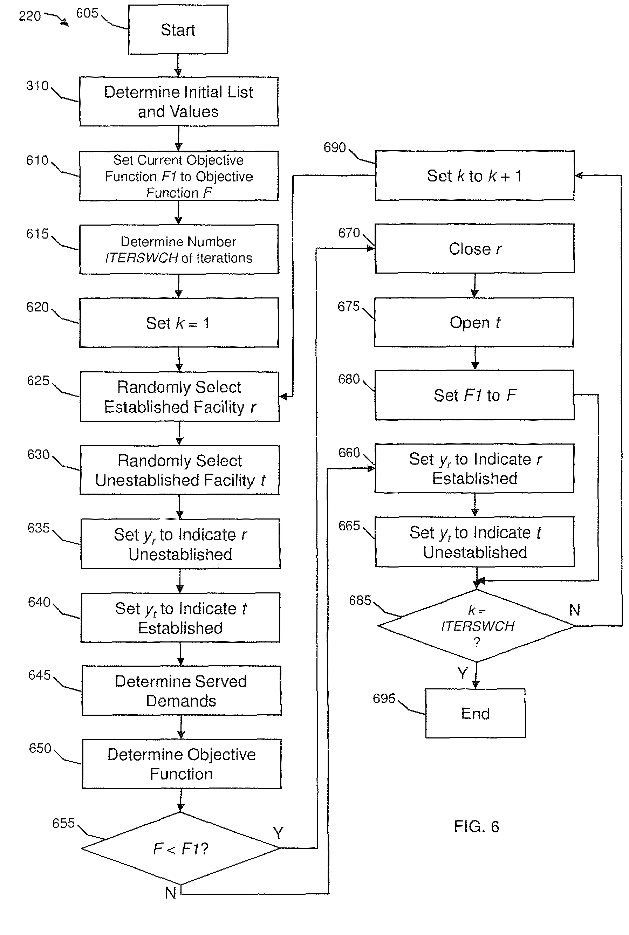

FIG. 6 shows an exemplary flow for the switching process of the step 220 in FIG. 2 in accordance with aspects of the present invention. At step 605, the process begins. At step 310, an initial list or solution of established facilities at sites and initial values associated with the initial list (e.g., an objective function F), are determined, as described above with respect to FIG. 4. At step 610, a current objective function *F1* is set to the determined objective function F.

At step 615, a number *ITERSWCH* of iterations performed by the switching process is determined, or set to a predetermined number. At step 620, an iteration marker $k$ is set to 1. At step 625, an established facility at a site r is randomly selected from the initial list of the established facilities. At step 630, an unestablished facility at a site $t$ is randomly selected from a complement set of the initial list of the established facilities, e.g., a list of unestablished facilities.

At step 635, an indication $y_r$ is set to zero, to indicate that the facility at the previously-established site r is unestablished. At step 640, an indication $y_t$ is set to one, to indicate that the previously-unestablished facility at the site $t$ is established. In other words, the facilities at the sites $r$ and $t$ are switched, at least temporarily. At step 645, the one or more indications whether a customer or demand is served from each site (e.g., "served demands"), are determined based on received information associated with the sites and the updated indications $y_r$ and $y_t$. At step 650, the objective function F of the initial list is determined based on the received information associated with the sites, the updated indications $y_r$ and $y_t$ and the determined served demands. That is, the switching process recalculates the initial values associated with the initial list based on the possible switching of the facilities at the sites $r$ and $t$.

At step 655, it is determined whether the recalculated objective function F is less than the current objective function F1. If so, the process continues at step 660; otherwise, the process continues at step 670. At step 660, the indication $y_r$ is set to one to indicate the facility at the site r is established. At step 665, the indication $y_t$ is set to zero, to indicate that the facility at the site $t$ is unestablished.

At step 670, the established facility at the site r is closed. At step 675, the unestablished facility at the site $t$ is opened. At step 680, the current objective function F1 is set to the recalculated objective function F to account for the switching of the facilities at the sites $r$ and $t$. At step 685, it is determined whether the iteration marker $k$ is equal to the number *ITERSWCH* of iterations performed by the switching process. If so, the process continues at step 695; otherwise, the process continues at 690.

At step 690, the iteration marker $k$ is set to $k + 1$. The process returns to step 625, e.g., the randomly selecting of established and unestablished facilities to potentially switch. In other words, in this case, the switching process has not completed the determined or predetermined number *ITERSWCH* of iterations to optimize the solution of the UFLP, e.g., the locating of the facilities at the sites. At step 695, the process ends.

The foregoing examples have been provided for the purpose of explanation and should not be construed as limiting the present invention. While the present invention has been described with reference to an exemplary embodiment. Changes may be made, within the purview of the appended claims, without departing from the scope and spirit of the present invention in its aspects. Also, although the present invention has been described herein with reference to particular materials and embodiments, the present invention is not intended to be limited to the particulars disclosed herein; rather, the present invention extends to all functionally equivalent structures, methods and uses, such as are within the scope of the appended claims.

## Claims

1. A method, comprising:

    establishing a maximum net benefit (MNB) of cost for closing one of one or more established facilities at one or more sites;
    closing an established facility of the one or more established facilities that results in the MNB of cost for closing;
    establishing a MNB of cost for opening one of one or more unestablished facilities at the one or more sites; and
    opening an unestablished facility of the one or more unestablished facilities that results in the MNB of cost for opening.

2. The method of claim 1, wherein the establishing of the MNB of cost for closing and the establishing of the MNB of cost for opening are based on information associated with the one or more sites, the information comprising at least one of;

    one or more indications whether a facility is established at each of the one or more sites;
    a total number of the one or more sites;
    a total number of one or more demands of one or more customers;
    one or more costs of establishing the facility at each of the one or more sites; and
    one or more costs of serving a customer from each of the one or more sites.

3. The method of claim 1, wherein:

    the establishing of the MNB of cost for closing comprises determining a net benefit of cost for closing each of the one or more established facilities based on information associated with the one or more sites; and
    the establishing of the MNB of cost for opening comprises determining a net benefit of cost for opening each of the one or more unestablished facilities based on information associated with the one or more sites.

4. The method of claim 3, wherein the determining the net benefit of cost for closing each of the one or more established facilities comprises determining an extra cost $\delta$ of reallocation of demands currently satisfied by a facility established at a site $s$ to another facility established at a site r based on the following equation:

$$\delta = \sum_{t \in T} d_t - f_s,$$

where $d_t$ is a cost of reallocation of a demand $t$ in a set $T$ of the demands, and $f_s$ is a savings due to a closure of the facility established at the site $s$, or wherein the determining the net benefit of cost for opening each of the one or more unestablished facilities comprises determining an extra cost $\delta$ of opening a facility unestablished at a site $s$ based on the following equation:

$$\delta = f_s - \sum_{t \in T} d_t,$$

where $f_s$ is a cost due to an opening of the facility unestablished at the site $s$, and $d_t$ is a cost of reallocation of a demand $t$ in a set $T$ of demands that can be satisfied by the facility unestablished at the site $s$.

5. The method of any one of the preceding claims, further comprising after the closing of the established facility and the opening of the established facility:

    randomly selecting at least one established facility of the one or more established facilities and at least one unestablished facility of the one or more unestablished facilities based on information associated with the one or more sites: and
    switching the at least one established facility with the at least one unestablished facility that results in a net benefit of cost based on the information associated with the one or more sites.

6. The method of claim 5, wherein the switching of the at least one established facility with the at least one unestablished facility comprises:

    setting the at least one established facility to be unestablished at the one or more sites; and
    setting the at least one unestablished facility to be established at the one or more sites, or wherein the switching of the at least one established facility with the at least one unestablished facility is performed for a predetermined number of iterations.

7. The method of any one of the preceding claims, further comprising:

determining an objective function constituting an upper bound of a solution for an uncapacitated facility location problem based on information associated with the one or more sites; and determining an updated objective function based on the objective function and one of the MNB of cost for closing and the MNB of cost for opening.

8. The method of claim 9 7, further comprising when the updated objective function is less than the objective function:

   establishing the MNB of cost for closing one of the one or more established facilities;
   closing another established facility of the one or more established facilities that results in the MNB of cost for closing;
   establishing the MNB of cost for opening one of the one or more unestablished facilities; and
   opening another unestablished facility of the one or more unestablished facilities that results in the MNB of cost for opening.

9. A computer program product comprising a computer usable storage medium having readable program code embodied in the storage medium, the computer program product includes at least one component operable to:

   randomly select at least one established facility of one or more established facilities at one or more sites and at least one unestablished facility of one or more unestablished facilities at the one or more sites; und
   switch the at least one established facility with the at least one unestablished facility that results in a net benefit of cost.

10. The computer program product of claim 9, wherein the randomly selecting of the at least one established facility and the at least one unestablished facility is based on information associated with the one or more sites, the information comprising at least one of:

   one or more indications whether a facility is established at each of the one or more sites;
   one or more indications whether a customer is served from each of the one or more sites;
   a total number of the one or more sites;
   a total number of one or more demands of one or more customers;
   one or more costs of establishing the facility at each of the one or more sites; and
   one or more costs of serving the customer from each of the one or more sites.

11. The computer program product of claim 9 or 10, wherein the switching of the at least one established facility with the at least one unestablished facility comprises:

   setting the at least one established facility to be unestablished at the one or more sites; and
   setting the at least one unestablished facility to be established at the one or more sites or wherein the switching of the at least one established facility with the at least one unestablished facility is performed for a predetermined number of iterations.

12. The computer program product of any one of claims 9 to 11, wherein the at least one component is further operable to before the switching of the at least one established facility with the at least one unestablished facility:

   establish a maximum net benefit (MNB) of cost for closing one of the one or more established facilities:
   close an established facility of the one or more established facilities that results in the MNB of cost for closing;
   establish a MNB of cost for opening one of the one or more unestablished facilities; and
   opening an unestablished facility of the one or more unestablished facilities that results in the MNB of cost for opening.

13. The computer program product of claim 12, wherein the establishing of the MNB of cost for closing comprises determining a net benefit of cost for closing each of the one or more established facilities based on information associated with the one or more sites, in particular wherein the determining the net benefit of cost for closing each of the one or more established facilities comprises determining, an extra cost $\delta$ of reallocation of demands currently satisfied by a facility established at a site s to another facility established at a site r based on the following equation:

$$\delta = \sum_{t \in T} d_t - f_s \, ,$$

where $d_t$ is a cost of reallocation of a demand $t$ in a set $T$ of the demands, and $f_s$ is a savings due to a closure of the facility established at the site $s$.

14. The computer program product of claims 12 or 13, wherein the establishing of the MNB of cost for opening comprises determining a net benefit of cost for opening each of the one or more unestablished facilities based on information associated with the one or more sites, in particular wherein the determining the net benefit of cost for opening each of the one or more unestablished facilities comprises determining an extra cost $\delta$ of opening a facility unestablished at a site $s$ based on the following equation:

$$\delta = f_s - \sum_{t \in T} d_t \,,$$

where $f_s$ is a cost due to an opening of the facility unestablished at the site $s$, and $d_t$ is a cost of reallocation of a demand $t$ in a set $T$ of demands that can be satisfied by the facility unestablished at the site $s$.

15. A computer system for solving an uncapacitated facility location problem, the system comprising:

a CPU, a computer readable memory and a computer readable storage media;
first program instructions to establish a maximum net benefit (MNR) of cost for closing one of one or more established facilities at one or more sites;
second program instructions to close an established facility of the one or more established facilities that results in the MNB of cost for closing;
third program instructions to establish a MNB of cost for opening one of one or more unestablished facilities at the one or more sites;
fourth program instructions to open an unestablished facility of the one or more unestablished facilities that results in the MNB of cost for opening;
fifth program instructions to randomly select at least one established facility of the one or more established facilities and at least one unestablished facility of the one or more unestablished facilities; and
sixth program instructions to switch the at least one established facility with the at least one unestablished facility that results in a net benefit of cost,
wherein the first, second, third, fourth, fifth, and sixth program instructions are stored on the computer readable storage media for execution by the CPU via the computer readable memory.

10

| Site 2 110 | Site 3 115 | Site *n* 120 |
|---|---|---|
| Site Manager 130 | Site Manager 135 | Site Manager 140 |

. . .

Server (Site 1) 12

Computing Device 14

O/S

Processor 20

26

Memory 22A

Site Manager 125

Program Control 44

Facility Manager 105

I/O Interface 24

Database 145

RAM — ROM

I/O Device 28

Storage System 22B

FIG. 1

200

205 — Start

210 — Close Maximum Net Benefit (MNB) Established Facility

215 — Open MNB Unestablished Facility

220 — Switch Established and Unestablished Facilities

225 — End

FIG. 2

FIG. 3

310 ⟍

405 ⟍ Start

410 ⟍ Receive Established Facilities

415 ⟍ Determine Served Demands

420 ⟍ Determine Objective Function

425 ⟍ End

FIG. 4

215

505 → **Start**

310 → Determine Initial List and Values

510 → Set Current Objective Function $F1$ to Objective Function $F$

515 → Set $k$ to 1

520 → Set Maximum Net Benefit ($MNB$) to 0

525 → Determine Established Facility Other than $k$th Unestablished Facility

530 → Determine Cost of Reallocation to $k$th Unestablished Facility

535 → Determine Extra Cost $\delta$ of Opening $k$th Unestablished Facility

540 → $\delta < 0$?  — N

545 → $\delta < MNB$?  — N

550 → Set $MNB$ to $\delta$

560 → Set $k$ to $k + 1$  — N

555 → $k$ = Number of Unestablished Facilities?  — Y

565 → Open $k$th Unestablished Facility

570 → Set $F$ to $F + MNB$

575 → $F < F1$?  — Y / N

580 → End

FIG. 5

FIG. 6

## EUROPEAN SEARCH REPORT

Europäisches
Patentamt
European
Patent Office
Office européen
des brevets

**Application Number**

EP 11 18 5541

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EPO: "Mitteilung des Europäischen Patentamts vom 1. Oktober 2007 über Geschäftsmethoden = Notice from the European Patent Office dated 1 October 2007 concerning business methods = Communiqué de l'Office européen des brevets,en date du 1er octobre 2007, concernant les méthodes dans le domaine des activités", JOURNAL OFFICIEL DE L'OFFICE EUROPEEN DES BREVETS.OFFICIAL JOURNAL OF THE EUROPEAN PATENT OFFICE.AMTSBLATTT DES EUROPAEISCHEN PATENTAMTS, OEB, MUNCHEN, DE, vol. 30, no. 11, 1 November 2007 (2007-11-01), pages 592-593, XP007905525, ISSN: 0170-9291 | 1-15 | INV. G06Q10/04 |
| L | * The claimed subject-matter with due regard to the description and drawings, relates to processes and methods comprised in the list of subject-matter and activities excluded from patentability under Art.52(2) and (3) EPC. The applicant is advised that in accordance with the established practice of the EPO, no search need to be performed in respect of those aspects of the claimed invention. The only identifiable technical aspects of the claimed invention relate to the use of conventional, general-purpose data processing technology for receiving/retrieving data and generating data according certain rules of an inherently non-technical nature (optimising the number facilities - whether to close existing ones and/or open new ones - in one or more sites to get the maximum net benefit of cost). The information technology employed is considered to have been generally known as | | |

**TECHNICAL FIELDS SEARCHED (IPC)**

G06Q

The present search report has been drawn up for all claims

| Place of search | Date of completion of the search | Examiner |
|---|---|---|
| The Hague | 31 October 2012 | Thiam, Mansour |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

Europäisches
Patentamt

European
Patent Office

Office européen
des brevets

## EUROPEAN SEARCH REPORT

**Application Number**

EP 11 18 5541

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| | it was widely available to everyone at the date of filing/priority of the present application. The notoriety of such prior art cannot reasonably be contested. No documentary evidence was therefore considered required. *<br><br>----- | | |
| | | | **TECHNICAL FIELDS SEARCHED (IPC)** |

The present search report has been drawn up for all claims

| Place of search | Date of completion of the search | Examiner |
|---|---|---|
| The Hague | 31 October 2012 | Thiam, Mansour |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)